# EUROPEAN PATENT APPLICATION

(11) **EP 3 614 051 A1**
(43) Date of publication of application: **26.02.2020**
(21) Application number: 19187746.3
(22) Date of filing: 23.07.2019
(51) Int. Cl.: F23R 3/00, B22F 5/00, F23R 3/60

(54) **A COMBUSTION CHAMBER, A COMBUSTION CHAMBER TILE AND A METHOD OF MANUFACTURING A COMBUSTION CHAMBER TILE**

(30) Priority: 23.08.2018 GB 201813753
(71) Applicant: Rolls-Royce plc, London N1 9FX (GB)
(72) Inventor: Marshall, John, Derby, Derbyshire DE24 8BJ (GB); Steward, Lynn, Derby, Derbyshire DE24 8BJ (GB)
(74) Representative: Rolls-Royce plc

(57) **Abstract**

A combustion chamber tile (48A, 48B, 52A, 52B) comprising a main body (45) having a first surface (41) and a second surface (43). The tile (48A, 48B, 52A, 52B) having a peripheral wall (74) extending around the edges of the tile (48A, 48B, 52A, 52B) and projecting from the first surface (41). The main body (45) and the peripheral wall (74) of the tile (48A, 48B, 52A, 52B) comprising a monolithic structure consisting of consolidated powder material. The peripheral wall (74) of the tile (48A, 48B, 52A, 52B) having at least one region (76) consisting of partially consolidated powder material. The at least one region (76) provides a region with reduced stiffness in the peripheral wall (74) enabling the tile (48A, 48B, 52A, 52B) to better conform to the shape of an annular wall (46, 50).

## Description

### Field of the disclosure

The present disclosure relates to a combustion chamber, a combustion chamber tile and a method of manufacturing a combustion chamber tile and in particular to a gas turbine engine combustion chamber, a gas turbine engine combustion chamber tile and a method of manufacturing a gas turbine engine combustion chamber tile.

### Background

One known type of combustion chamber comprises one or more walls each of which comprises a double, or dual, wall structure. A dual wall structure comprises an annular outer wall and an annular inner wall spaced radially from the annular outer wall to define one or more chambers. The annular outer wall has a plurality of impingement apertures to supply coolant into the chamber, or chambers, and the annular inner wall has a plurality of effusion apertures to supply coolant from the chamber, or chambers, over an inner surface of the annular inner wall to provide a film of coolant on the inner surface of the annular inner wall. The film of coolant protects the inner surface of the annular inner wall.

The annular inner wall generally comprises a plurality of rows of tiles arranged side by side between the upstream end of the combustion chamber and the downstream end of the combustion chamber and each row of tiles comprises a plurality of tiles arranged circumferentially side by side around the combustion chamber. Each tile comprises a main body having a first surface facing the annular outer wall and a second surface facing away from the annular outer wall and towards a combustion zone, each tile has a peripheral wall which extends around the edges of the tile and projects from the first surface towards the annular outer wall to space the tile from the annular outer wall to form a chamber. Each tile is secured to the annular outer wall by one or more integral threaded studs which project from the first surface and through associated mounting apertures in the annular outer wall and are received in respective nuts.

The peripheral wall of each tile must remain in contact with the annular outer wall throughout the operation of the combustion chamber in order to provide a seal for the chamber to prevent leakage of coolant from the chamber. The peripheral wall must have a predetermined height throughout its length and must be able to support loading stresses, e.g. the peripheral wall must have a predetermined thickness to carry loads and also to enable the tile to be cast.

However, due to manufacturing tolerances and changes in the shape of the tile and/or peripheral wall due to the applied loads and the thermal conditions during operation of the combustion chamber the tile shape and peripheral wall may not match the shape of the surface of the annular outer wall. The peripheral wall stiffens the tile such that it is difficult for the tile to conform to the shape of the surface of the annular outer wall. The non-matching tile shape and the shape of the surface of the annular outer wall introduces stresses in the tile and the at least one threaded stud due to the at least one threaded stud and the associated nut deforming the tile to conform to the shape of the surface of the annular outer wall when the nut is threaded and tightened on the threaded stud.

Accordingly the present disclosure seeks to provide a combustion chamber and a combustion chamber tile which reduces, or overcomes, the above mentioned problem.

### Summary

The present disclosure provides a combustion chamber tile, a method of manufacturing a combustion chamber tile, a combustion chamber, and a gas turbine engine, as set out in the appended claims.

According to a first aspect there is provided a combustion chamber comprising an annular wall and a plurality of tiles, each tile being removably secured to the annular wall, each tile comprising a main body having a first surface facing the annular wall and a second surface facing away from the annular wall and towards a combustion zone, each tile having a peripheral wall extending around the edges of the tile and projecting from the first surface towards the annular wall to space the tile from the annular wall, the main body and the peripheral wall of at least one of the tiles comprising a monolithic structure consisting of consolidated powder material, the peripheral wall of the at least one of the tiles having at least one region consisting of partially consolidated powder material.

The peripheral wall of the at least one of the tiles may have a plurality of regions consisting of partially consolidated powder material.

The plurality of regions may be equally spaced around the edges of the at least one of the tiles.

The main body and the peripheral wall of each one of a plurality of the tiles may comprise a monolithic structure consisting of consolidated powder material, the peripheral wall of each one of the plurality of the tiles having at least one region consisting of partially consolidated powder material.

The peripheral wall of each one of the plurality of tiles may have a plurality of regions consisting of partially consolidated powder material.

The plurality of regions consisting of partially consolidated powder material may be equally spaced around the edges of each one of the plurality of tiles.

The at least one region consisting of partially consolidated powder material may consist of powder material which has a packing density of less than 85%. The at least one region consisting of partially consolidated powder material may consist of powder material which has a packing density of 70% to 80%.

The at least one region consisting of partially consolidated powder material may have a lower packing density than the remainder of the peripheral wall.

The remainder of the peripheral wall may consist of powder material which has a packing density greater than 90%. The remainder of the peripheral wall may consist of powder material which has a packing density of 95% to 99%. The remainder of the peripheral wall may consist of powder material which is fully consolidated. The main body of the at least one of the tiles may consist of powder material which has a packing density greater than 90%. The main body of the at least one of the tiles may consist of powder material which has a packing density of 95% to 99%. The main body of the at least one of tiles may consist of powder material which is fully consolidated.

The remainder of the peripheral wall may have the same packing density as the main body of the at least one of the tiles. The at least one region of the peripheral wall may have a lower packing density than the main body of the at least one of the tiles.

The at least one, or each, region consisting of partially consolidated powder material may extend perpendicularly through the full thickness of the peripheral wall. The at least one region, or each region, consisting of partially consolidated powder material may extend at an angle to the perpendicular direction through the full thickness of the peripheral wall. The at least one, or each, region consisting of partially consolidated powder material may have a serpentine shape.

The at least one tile, or each tile, may have at least one attachment feature projecting from the first surface, the main body, the peripheral wall and the at least one attachment feature of the tile comprising a monolithic structure consisting of consolidated powder material. The at least one attachment feature may be a stud. The at least one attachment feature may be a boss.

The at least one tile, or each tile, may have effusion cooling apertures extending through the main body of the tile from the first surface to the second surface. The at least one tile, or each tile, may have pedestals, pins or fins which project from the first surface of the tile.

The powder material may be a metal powder. The metal powder may be a nickel base superalloy, a cobalt base superalloy or an iron base superalloy.

The at least one region of partially consolidated powder material provides a region with reduced stiffness in the peripheral wall enabling the tile to better conform to the shape of the annular wall. The at least one region of partially consolidated material provides a barrier to the leakage of coolant from the space between the tile and the annular wall.

According to a second aspect there is provided a combustion chamber tile comprising a main body having a first surface and a second surface, the tile having a peripheral wall extending around the edges of the tile and projecting from the first surface, the main body and the peripheral wall of the tile comprising a monolithic structure consisting of consolidated powder material, the peripheral wall of the tile having at least one region consisting of partially consolidated powder material.

The peripheral wall of the tile may have a plurality of regions consisting of partially consolidated powder material.

The plurality of regions consisting of partially consolidated powder material may be equally spaced around the edges of the tile.

The at least one region consisting of partially consolidated powder material may consist of powder material which has a packing density of less than 85%. The at least one region consisting of partially consolidated powder material may consist of powder material which has a packing density of 70% to 80%.

The at least one region consisting of partially consolidated powder material may have a lower packing density than the remainder of the peripheral wall.

The remainder of the peripheral wall may consist of powder material which has a packing density greater than 90%. The remainder of the peripheral wall may consist of powder material which has a packing density of 95% to 99%. The remainder of the peripheral wall may consist of powder material which is fully consolidated.

The main body of the tile may consist of powder material which has a packing density greater than 90%. The main body of the tile may consist of powder material which has a packing density of 95% to 99%. The main body of the tile may consist of powder material which is fully consolidated.

The remainder of the peripheral wall may have the same packing density as the main body of the tile. The at least one region of the peripheral wall may have a lower packing density than the main body of the tile.

The at least one, or each, region consisting of partially consolidated powder material may extend perpendicularly through the full thickness of the peripheral wall. The at least one region, or each region, consisting of partially consolidated powder material may extend at an angle to the perpendicular direction through the full thickness of the peripheral wall. The at least one, or each, region consisting of partially consolidated powder material may have a serpentine shape.

The tile may have at least one attachment feature projecting from the first surface, the main body, the peripheral wall and the at least one attachment feature of the tile comprising a monolithic structure consisting of consolidated powder material. The at least one attachment feature may be a stud. The at least one attachment feature may be a boss.

The tile may have effusion cooling apertures extending through the main body of the tile from the first surface to the second surface. The tile may have pedestals, pins or fins which project from the first surface of the tile.

The powder material may be a metal powder. The metal powder may be a nickel base superalloy, a cobalt base superalloy or an iron base superalloy.

According to a third aspect there is provided a method of manufacturing a combustion chamber tile, the tile comprising a main body having a first surface and a second surface, the tile having a peripheral wall extending around the edges of the tile and projecting from the first surface, the main body and the peripheral wall of the tile comprising a monolithic structure consisting of consolidated powder material, the peripheral wall of the tile having at least one region consisting of partially consolidated powder material, the method comprising manufacturing the tile by an additive manufacturing technique using a powder material, the additive manufacturing technique comprising directing an energy beam on the powder material to consolidate the powder material to form the main body of the tile and the peripheral wall and directing the energy beam on the powder material and controlling the energy beam to partially consolidate the powder material in the at least one region.

The method may comprise directing the energy beam on the powder material and controlling the energy beam to partially consolidate the powder material in a plurality of regions.

The method may comprise directing a laser beam or an electron beam on the powder material.

The method may comprise powder bed laser deposition.

The tile may have at least one attachment feature projecting from the first surface, the main body, the peripheral wall and the at least one attachment feature of the tile comprising a monolithic structure consisting of consolidated powder material, the method comprising directing an energy beam on the powder material to consolidate the powder material to form the main body of the tile, the peripheral wall and the at least one attachment feature. The at least one attachment feature may be a stud. The at least one attachment feature may be a boss.

The additive manufacturing technique may produce effusion cooling apertures in the combustion chamber tile. The additive manufacturing technique may produce other features on the combustion chamber tile. The additive manufacturing technique may produce pedestals, pins or fins, which project from the first surface of the combustion chamber tile.

The powder material may be a metal powder. The metal powder may be a nickel base superalloy, a cobalt base superalloy or an iron base superalloy.

According to a fourth aspect there is provided a gas turbine engine for an aircraft, the gas turbine engine having a combustion chamber of the first aspect.

In some embodiments the gas turbine engine comprises: an engine core comprising a turbine, a compressor, a combustion chamber and a core shaft connecting the turbine to the compressor; a fan located upstream of the engine core, the fan comprising a plurality of fan blades; and a gearbox that receives an input from the core shaft and outputs drive to the fan so as to drive the fan at a lower rotational speed than the core shaft, wherein: the combustion chamber comprises an annular wall and a plurality of tiles, each tile being removably secured to the annular wall, each tile comprising a main body having a first surface facing the annular wall and a second surface facing away from the annular wall and towards a combustion zone, each tile having a peripheral wall extending around the edges of the tile and projecting from the first surface towards the annular wall to space the tile from the annular wall, the main body and the peripheral wall of at least one of the tiles comprising a monolithic structure consisting of consolidated powder material, the peripheral wall of the at least one of the tiles having at least one region consisting of partially consolidated powder material.

In some embodiments the turbine is a first turbine, the compressor is a first compressor, and the core shaft is a first core shaft; the engine core further comprises a second turbine, a second compressor, and a second core shaft connecting the second turbine to the second compressor; and the second turbine, second compressor, and second core shaft are arranged to rotate at a higher rotational speed than the first core shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used.

For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8.. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other. Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform. The radius of the fan may be measured between the engine centreline and the tip of a fan blade at its leading edge. The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm, 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 220 cm to 300 cm (for example 240 cm to 280 cm or 250 cm to 270cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 330 cm to 380 cm may be in the range of from 1200 rpm to 2000 rpm, for example in the range of from 1300 rpm to 1800 rpm, for example in the range of from 1400 rpm to 1800 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.30, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds), for example in the range of from 0.28 to 0.31, or 0.29 to 0.3.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds), for example in the range of form 12 to 16, 13 to 15, or 13 to 14. The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds), for example in the range of from 80 Nkg⁻¹s to 100 Nkg⁻¹s, or 85 Nkg⁻¹s to 95 Nkg⁻¹s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330kN to 420 kN, for example 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds), for example in the range of from 1800K to 1950K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions have the conventional meaning and would be readily understood by the skilled person. Thus, for a given gas turbine engine for an aircraft, the skilled person would immediately recognise cruise conditions to mean the operating point of the engine at mid-cruise of a given mission (which may be referred to in the industry as the "economic mission") of an aircraft to which the gas turbine engine is designed to be attached. In this regard, mid-cruise is the point in an aircraft flight cycle at which 50% of the total fuel that is burned between top of climb and start of descent has been burned (which may be approximated by the midpoint - in terms of time and/or distance- between top of climb and start of descent. Cruise conditions thus define an operating point of, the gas turbine engine that provides a thrust that would ensure steady state operation (i.e. maintaining a constant altitude and constant Mach Number) at mid-cruise of an aircraft to which it is designed to be attached, taking into account the number of engines provided to that aircraft. For example where an engine is designed to be attached to an aircraft that has two engines of the same type, at cruise conditions the engine provides half of the total thrust that would be required for steady state operation of that aircraft at mid-cruise.

In other words, for a given gas turbine engine for an aircraft, cruise conditions are defined as the operating point of the engine that provides a specified thrust (required to provide - in combination with any other engines on the aircraft - steady state operation of the aircraft to which it is designed to be attached at a given mid-cruise Mach Number) at the mid-cruise atmospheric conditions (defined by the International Standard Atmosphere according to ISO 2533 at the mid-cruise altitude). For any given gas turbine engine for an aircraft, the mid-cruise thrust, atmospheric conditions and Mach Number are known, and thus the operating point of the engine at cruise conditions is clearly defined.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be part of the cruise condition. For some aircraft, the cruise conditions may be outside these ranges, for example below Mach 0.7 or above Mach 0.9.

Purely by way of example, the cruise conditions may correspond to standard atmospheric conditions (according to the International Standard Atmosphere, ISA) at an altitude that is in the range of from 10000 m to 15000 m, for example in the range of from 10000 m to 12000 m, for example in the range of from 10400 m to 11600 m (around 38000 ft), for example in the range of from 10500 m to 11500 m, for example in the range of from 10600 m to 11400 m, for example in the range of from 10700 m (around 35000 ft) to 11300 m, for example in the range of from 10800 m to 11200 m, for example in the range of from 10900 m to 11100 m, for example on the order of 11000 m. The cruise conditions may correspond to standard atmospheric conditions at any given altitude in these ranges.

Purely by way of example, the cruise conditions may correspond to an operating point of the engine that provides a known required thrust level (for example a value in the range of from 30kN to 35kN) at a forward Mach number of 0.8 and standard atmospheric conditions (according to the International Standard Atmosphere) at an altitude of 38000ft (11582m). Purely by way of further example, the cruise conditions may correspond to an operating point of the engine that provides a known required thrust level (for example a value in the range of from 50kN to 65kN) at a forward Mach number of 0.85 and standard atmospheric conditions (according to the International Standard Atmosphere) at an altitude of 35000 ft (10668 m).

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

According to an aspect, there is provided an aircraft comprising a gas turbine engine as described and/or claimed herein. The aircraft according to this aspect is the aircraft for which the gas turbine engine has been designed to be attached. Accordingly, the cruise conditions according to this aspect correspond to the mid-cruise of the aircraft, as defined elsewhere herein.

According to an aspect, there is provided a method of operating a gas turbine engine as described and/or claimed herein. The operation may be at the cruise conditions as defined elsewhere herein (for example in terms of the thrust, atmospheric conditions and Mach Number).

According to an aspect, there is provided a method of operating an aircraft comprising a gas turbine engine as described and/or claimed herein. The operation according to this aspect may include (or may be) operation at the mid-cruise of the aircraft, as defined elsewhere herein.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief description of the drawings

Embodiments will now be described by way of example only, with reference to the Figures, in which:
**Figure 1** is a sectional side view of a gas turbine engine.
**Figure 2** is a close up sectional side view of an upstream portion of a gas turbine engine.
**Figure 3** is a partially cut-away view of a gearbox for a gas turbine engine.
**Figure 4** is an enlarged cross-sectional view of a combustion chamber arrangement according to the present disclosure.
**Figure 5** is a further enlarged portion of the combustion chamber arrangement shown in figure 4.
**Figure 6** is a perspective view of a combustion chamber tile according to the present disclosure.
**Figure 7** is a plan view of different types of region in the peripheral wall of a combustion chamber tile according to the present disclosure.
**Figure 8** is an apparatus for manufacturing a combustion chamber tile according to the present disclosure.

### Detailed description

Aspects and embodiments of the present disclosure will now be discussed with reference to the accompanying figures. Further aspects and embodiments will be apparent to those skilled in the art.

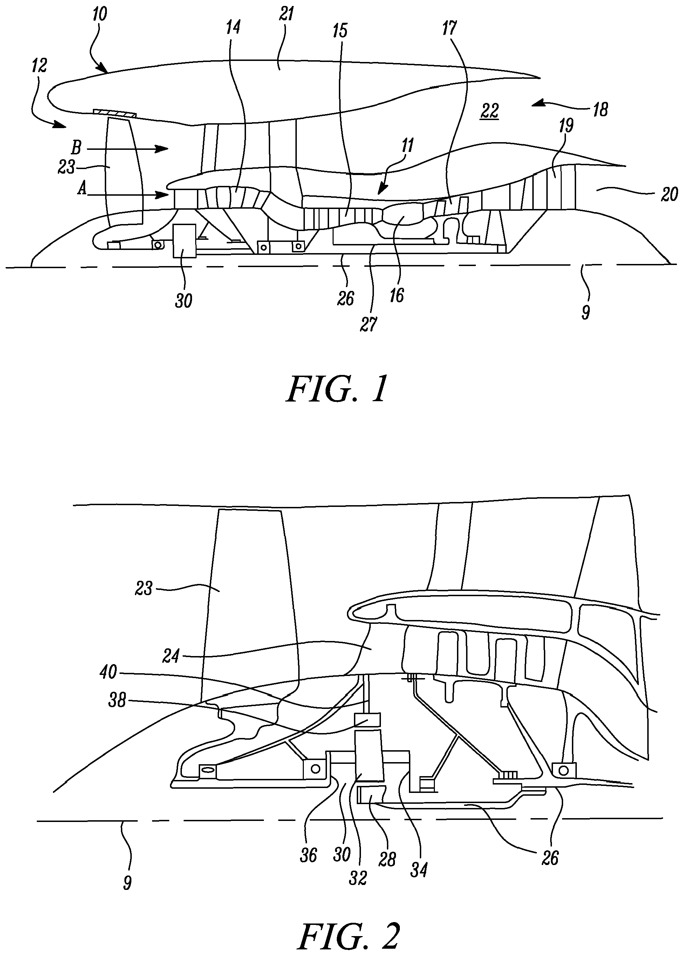

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in **Figure 2**. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

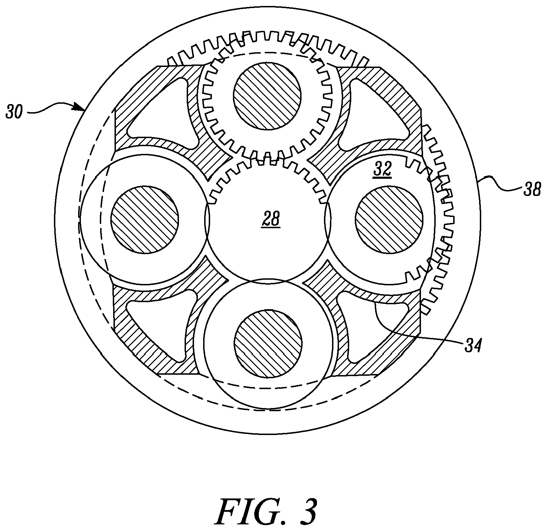

The epicyclic gearbox 30 is shown by way of example in greater detail in **Figure 3****.** Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2. Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

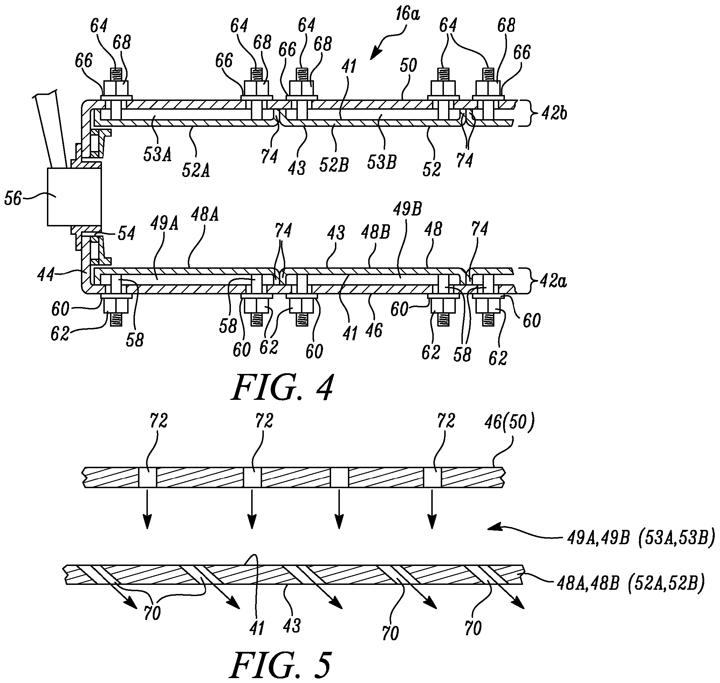

The combustion chamber 16a, as shown more clearly in **Figure 4****,** is an annular combustion chamber and comprises a radially inner annular wall structure 42a, a radially outer annular wall structure 42b and an upstream end wall structure 44. The radially inner annular wall structure 42a comprises a first annular wall 46 and a second annular wall 48. The radially outer annular wall structure 42b comprises a third annular wall 50 and a fourth annular wall 52. The second annular wall 48 is spaced radially from and is arranged radially around the first annular wall 46 and the first annular wall 46 supports the second annular wall 48. The fourth annular wall 52 is spaced radially from and is arranged radially within the third annular wall 50 and the third annular wall 50 supports the fourth annular wall 52. The upstream end of the first annular wall 46 is secured to the upstream end wall structure 44 and the upstream end of the third annular wall 50 is secured to the upstream end wall structure 44. The upstream end wall structure 44 has a plurality of circumferentially spaced apertures 54 and each aperture 54 has a respective one of a plurality of fuel injectors 56 located therein. The fuel injectors 56 are arranged to supply fuel into the annular combustion chamber 16a during operation of the gas turbine engine 10.

The second annular wall 48 comprises a plurality of rows of combustion chamber tiles 48A and 48B and the fourth annular wall 52 comprises a plurality of rows of combustion chamber tiles 52A and 52B. The combustion chamber tiles 48A and 48B are secured onto the first annular wall 46 by threaded studs 58, washers 60 and nuts 62 and the combustion chamber tiles 52A and 52B are secured onto the third annular wall 50 by threaded studs 64, washers 66 and nuts 68.

Each of the combustion chamber tiles 48A, 48B, 52A and 52B comprises a main body 45 which has a first surface 41 and a second surface 43, as shown in figure 4. The first surface 41 of each combustion chamber tile 48A, 48B, 52A, 52B is an outer surface facing the respective outer annular wall 46 and 50 and the second surface 43 of each combustion chamber tile 48A, 48B, 52A, 52B is an inner surface facing away from the respective outer annular wall 46 and 50 and towards the combustion zone within the combustion chamber 16a.

The combustion chamber tiles 48A, 48B, 52A and 52B are for annular combustion chamber wall 42a and 42b and each combustion chamber tile 48A, 48B, 52A and 52B has effusion cooling apertures 70, as shown in **Figure 5**. The effusion cooling apertures 70 extend through the combustion chamber tiles 48A, 48B, 52A, 52B from the first surface 41 to the second surface 43. The effusion cooling apertures 70 are arranged in axially spaced rows and the effusion cooling apertures 70 in each row are circumferentially spaced apart. The effusion cooling apertures 70 in each row are offset circumferentially from the effusion cooling apertures 70 in each adjacent row. The effusion cooling apertures 70 are arranged at an acute angle to the second surface 43 of the combustion chamber tiles 48A, 48B, 52A, 52B. The effusion cooling apertures 70 may be arranged at an angle of 20° to 90° to the second surface 43 of the combustion chamber tiles 48A, 48B, 52A, 52B. The effusion cooling apertures 70 are arranged for example at an angle of 20° to 30° to the second surface 43 of the combustion chamber tiles 48A, 48B, 52A, 52B.

In addition the first annular wall 46 and the third annular wall 50 are provided with a plurality of impingement cooling apertures 72 which are arranged to direct coolant, e.g. air, onto the first surface 41 of the tiles 48A, 48B, 52A and 52B, as shown in figure 5. The impingement cooling apertures 72 are generally arranged to extend perpendicularly through the first annular wall 46 and the third annular wall 50. The impingement cooling apertures 72 are generally arranged in rows in which the impingement cooling apertures 72 are circumferentially spaced and the impingement cooling apertures 72 in axially adjacent rows are circumferentially staggered.

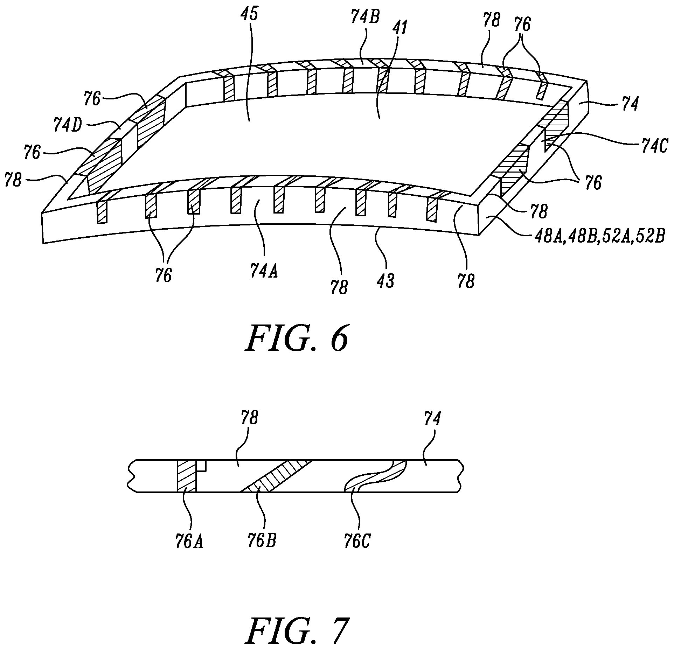

Each combustion chamber tile 48A, 48B, 52A, 52B is shown more clearly in **Figure 6**, and comprises a peripheral wall, or rail, 74 which extends around the periphery of the tile 48A, 48B, 52A, 52B and extends from the first surface 41 of the tile 48A, 48B, 52A, 52B towards the first annular wall 46 or third annular wall 50 respectively. The peripheral wall, or rail, 74 spaces the tile 48A, 48B, 52A, 52B from the first annular wall 46 or third annular wall 50 respectively and forms a respective chamber 49A, 49B, 53A, 53B between the tile 48A, 48B, 52A, 52B and the first annular wall 46 or third annular wall 50 respectively. The peripheral wall, or rail, 74 comprises axially spaced circumferentially extending wall portions 74A and 74B and circumferentially spaced axially extending wall portions 74C and 74D which extend between and are secured to the wall portions 74A and 74B. The peripheral wall, or rail, 74 extends around the edges of the tile 48A, 48B, 52A, 52B and projects from the first surface 41. The attachment features 58 and 64 have been omitted from figure 6, but would be present.

The main body 45 and the peripheral wall 74 of the tile 48A, 48B, 52A, 52B comprises a monolithic structure consisting of consolidated powder material, the peripheral wall 74 of the tile 48A, 48B, 52A, 52B has at least one region 76 consisting of partially consolidated powder material, as shown in figure 6. In this example the peripheral wall 74 of the tile 48A, 48B, 52A, 52B has a plurality of regions 76 consisting of partially consolidated powder material. The plurality of regions 76 may be equally spaced around the edges of the tile 48A, 48B, 52A, 52B. The at least one region 76 of the peripheral wall 74 consists of powder material which has a packing density of less than 85%. The at least one region 76 of the peripheral wall 74 for example consists of powder material which has a packing density of 70% to 80%. In general, the at least one region 76 of the peripheral wall 74 consists of powder material which has a lower packing density than the remainder of the peripheral wall 74. The remainder 78 of the peripheral wall 74 consists of powder material which has a packing density greater than 90%. The remainder 78 of the peripheral wall 74 for example consists of powder material which has a packing density of 95% to 99%. The remainder 78 of the peripheral wall 74 may consist of powder material which is fully consolidated. The main body 45 of the tile 48A, 48B, 52A, 52B consists of powder material which has a packing density greater than 90%. The main body 45 of the tile 48A, 48B, 52A, 52B for example consist of powder material which has a packing density of 95% to 99%. The main body 45 of the tile 48A, 48B, 52A, 52B may consist of powder material which is fully consolidated. The remainder 78 of the peripheral wall 74 has the same packing density as the main body 45 of the tile 48A, 48B, 52A, 52B. The at least one region 76 of the peripheral wall 74 has a lower packing density than the main body 45 of the tile 48A, 48B, 52A, 52B.

Note that packing density, as is known to a person skilled in the art, is the fraction of the space, or volume, of a feature, e.g. a main body 45 of a tile, a region 76 of the peripheral wall 74 or the remainder 78 of the peripheral wall 74, filled by the consolidated powder material and is expressed in percentage terms in this application.

The at least one, or each, region 76A may extend perpendicularly through the full thickness of the peripheral wall 74, as shown in **Figure 7**. The at least one, or each region, 76B may extend at an angle to the perpendicular direction through the full thickness of the peripheral wall 74. The at least one, or each, region 76C may have a serpentine shape.

As mentioned previously the tile 48A, 48B, 52A, 52B has at least one stud, or other attachment feature, 58 or 64 respectively projecting from the first surface 41 of the main body 45. The peripheral wall 74, the at least one attachment feature 58 or 64 and the main body 45 of the tile 48A, 48B, 52A, 52B comprising a monolithic structure consisting of consolidated powder material.

The powder material may be a metal powder, for example the metal powder may be a nickel base superalloy, a cobalt base superalloy or an iron base superalloy.

The main body 45 and the peripheral wall 74 of each one of a plurality of the tiles 48A, 48B, 52A, 52B comprises a monolithic structure consisting of consolidated powder material, the peripheral wall 74 of each one of the plurality of the tiles 48A, 48B, 52A, 52B has at least one region 76 consisting of partially consolidated powder material. The peripheral wall 74 of each one of the plurality of tiles 48A, 48B, 52A, 52B may have a plurality of regions 76 consisting of partially consolidated powder material. The plurality of regions 76 may be equally spaced around the edges of each one of the plurality of tiles 48A, 48B, 52A, 52B. There may be a relatively small number of regions 76 which have a relatively large length in a peripheral direction of the peripheral wall 74 as illustrated axially extending wall portions 74C and 74D of figure 6 in order to provide a desired reduction in the stiffness in the peripheral wall 74. Alternatively, there may be a relatively large number of regions 76 which have a relatively small length in a peripheral direction of the peripheral wall 74 as illustrated circumferentially extending wall portions 74A and 74B of figure 6 in order to provide a desired reduction in the stiffness in the peripheral wall 74. The remainder 78 of the peripheral wall 74 consisting of consolidated powder material which has a higher packing density than the, or each, region 76 consisting of partially consolidated powder material is required to react the clamping loads applied by the attachment features. The, or each, region 76 reduces the stiffness of the peripheral wall 74 and the tile 48A, 48B, 52A, 52B to allow the tile 48A, 48B, 52A, 52B to conform to the shape of the surface of the first annular wall 74 or third annular wall 50 respectively while controlling, e.g. reducing or preventing, leakage of coolant, air, from the respective chamber 49A, 49B, 53A, 53B.

In operation the at least one, or each, region 76 of partially consolidated powder material provides a region with reduced stiffness in the peripheral wall 74 enabling the tile 48A, 48B, 52A, 52B to better conform to the shape of the first annular wall 46 or the third annular wall 50 respectively. The at least one region, or each, 76 of partially consolidated material provides a barrier to the leakage of coolant from the space between the tile 48A, 48B, 52A, 52B and the first annular wall 46 or third annular wall 50 respectively.

The combustion chamber tiles 48A, 48B, 52A, 52B are manufactured by an additive manufacturing technique using a powder material. The additive manufacturing technique comprises directing an energy beam on the powder material to consolidate the powder material to form the main body 45 of the tile 48A, 48B, 52A, 52B and the peripheral wall 74 and directing the energy beam on the powder material and controlling the energy beam to partially consolidate the powder material in the at least one region 76. The method may comprise directing the energy beam on the powder material and controlling the energy beam to partially consolidate the powder material in a plurality of regions 76. The method may comprise directing a laser beam or an electron beam on the powder material. The method may comprise powder bed laser deposition.

As mentioned previously, the tile 48A, 48B, 52A, 52B may have at least one stud 58, 66 or other attachment feature projecting from the first surface 41 and the main body 45, the peripheral wall 74 and the at least one attachment feature 58, 66 of the tile 48A, 48B, 52A, 52B comprises a monolithic structure consisting of consolidated powder material. The method of manufacturing the tile 48A, 48B, 52A, 52B comprises directing an energy beam on the powder material to consolidate the powder material to form the main body 45, the peripheral wall 74 and the at least one attachment feature 58, 66 of the tile 48A, 48B, 52A, 52B. The powder material may be a metal powder. The metal powder may be a nickel base superalloy, a cobalt base superalloy or an iron base superalloy.

The combustion chamber tile 48A, 48B, 52A, 52B is manufactured by an additive manufacturing process, for example selective laser melting, direct laser deposition, powder bed fusion, shaped metal deposition. Powder bed fusion uses a laser beam or an electron beam to melt and fuse powder particles together to build up an article layer by layer from powder material, e.g. powder metal, by moving the laser beam, or electron beam, in a predetermined pattern, or path, across sequentially deposited layers of powder material. Shaped metal deposition uses a welding torch, a laser beam or an electron beam torch to melt and fuse material together to build up an article layer by layer from powder material, e.g. powder metal, or welding rod, metal rod by moving the torch, laser beam or electron beam in a predetermined pattern, or path, and supplying the powder material or welding rod into the path.

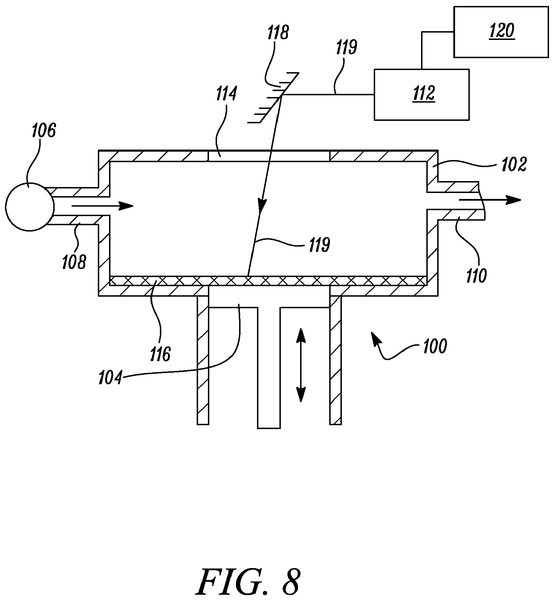

The combustion chamber tile 48A, 48B, 52A, 52B is manufactured for example using selective laser melting or powder bed fusion using an apparatus shown in **Figure 8**. The apparatus 100 comprises a sealed chamber 102, which has a retractable platform 104. A pump 106 is provided to supply an inert gas, argon or nitrogen, through a pipe 108 into the chamber 102 and gas is extracted from the chamber 102 via a pipe 110. A laser 112, e.g. an infrared laser, is provided to direct a laser beam 119 through a window 114 in the chamber 102. A controller 120 has a CAD definition of the shape and features of the combustion chamber tile 48A, 48B, 52A, 52B of the combustion chamber 16a and the laser 112 is moved under the control of the controller 120.

The combustion chamber tile 48A, 48B, 52A, 52B is manufactured by placing a first layer 116 of a suitable metal, or alloy, powder, on the retractable platform 104 in the sealed chamber 102. The laser beam 119 is scanned across the layer of metal powder 116 in a predetermined pattern to form a first layer of the combustion chamber tile 48A, 48B, 52A, 52B by bodily moving the laser 112 appropriate distances in perpendicular X and Y directions or by deflecting the laser beam 119 off a movable mirror 118. The laser beam 119 melts and fuses or sinters the metal powder where it strikes the layer of metal powder 116. Then a second, thin, layer of metal, or alloy, is placed on the first layer, the platform 104 is retracted one increment outwards from the chamber 102 and the laser beam 119 is scanned across the layer of metal powder in a further predetermined pattern to form a second layer of the combustion chamber tile 48A, 48B, 52A, 52B. The laser beam 119 melts and fuses or sinters, e.g. consolidates, the metal powder where it strikes the second layer of metal powder 116 and bonds, fuses or sinters, consolidate, the second layer of the combustion chamber tile 48A, 48B, 52A, 52B to the first layer of the combustion chamber tile 48A, 48B, 52A, 52B. The process of placing layers of metal powder, retracting the platform 104 and scanning the laser beam 119 across the layer of metal powder in a predetermined pattern to fuse and sinter the metal powder in each layer and to bond each layer to the previously deposited layer is repeated a sufficient number of times to build the combustion chamber tile 48A, 48B, 52A, 52B layer by layer from axial end to the opposite axial end. The predetermined pattern of scanning of the laser beam 119 for each layer is determined by the CAD model of the combustion chamber tile 48A, 48B, 52A, 52B.

The combustion chamber tile 48A, 48B, 52A, 52B may have one or more regions 76 in the peripheral wall 74 where the metal powder in a particular layer or layers in the is not only partially melted and fused or sintered, e.g. only partially consolidated and so the one or more regions 76 have reduced density compared to the reminder of the peripheral wall 74. The one or more regions 76 in the peripheral wall 74 have reduced density compared to the main body 45.

The combustion chamber tile 48A, 48B, 52A, 52B may have one or more regions where the metal powder in a particular layer or layers in the main body 45 is not melted and fused or sintered. These regions of the particular layer or layers in the main body 45 where the metal powder is not melted and fused or sintered form apertures through the main body 45 of the combustion chamber tile 48A, 48B, 52A, 52B. Some of these apertures may be dilution apertures to provide dilution air into the annular combustion chamber 16a. Some of these apertures may be effusion cooling apertures 70. The additive manufacturing technique also produces the effusion cooling apertures 70 in the combustion chamber tile 48A, 48B, 52A, 52B.

The additive manufacturing technique may also produce other features on the combustion chamber tile 48A, 48B, 52A, 52B for example pedestals, pins or fins, which project from the first surface 41 of the combustion chamber tile 48A, 48B, 52A, 52B.

The advantage of the present disclosure is that it provides a combustion chamber tile in which the peripheral wall has reduced stiffness to enable it to better conform to the shape of the surface of the annular outer wall. The present disclosure provides a combustion chamber tile in which the peripheral wall has reduced stiffness to enable it to better conform to the shape of the surface of the annular outer wall and also to seal with the annular outer wall. The present disclosure also reduces the stresses in the tile and the, or each, threaded stud because more of the load applied to the threaded stud by the tightening of the nut to a specified torque is used to stretch the threaded stud to ensure the local clamping load at the threaded stud is achieved rather than deforming the tile to conform to the surface of the annular outer wall and this results in a lower clamping load and hence an increase in working life of the tile before failure of a threaded stud due to metal fatigue.

Although the present disclosure has referred to the use of one or more threaded studs as an attachment features and cooperating nuts for the, or each, tile it is equally possible to use other attachment features for example one or more integrally formed internally threaded bosses which project from the tile and cooperating bolts.

It will be understood that the invention is not limited to the embodiments above-described and various modifications and improvements can be made without departing from the concepts described herein and defined within the following claims. Except where mutually exclusive, any of the features may be employed separately or in combination with any other features and the disclosure extends to and includes all combinations and sub-combinations of one or more features described herein.

## Claims

1. A combustion chamber tile (48A, 48B, 52A, 52B), the tile comprising a main body (45) having a first surface (41) and a second surface (43), the tile having a peripheral wall (74) extending around the edges of the tile and projecting from the first surface, the main body and the peripheral wall of the tile comprising a monolithic structure consisting of consolidated powder material, the peripheral wall of the tile having at least one region(76) consisting of partially consolidated powder material.

2. The combustion chamber tile of claim 1, wherein the peripheral wall (74) of the tile having a plurality of regions consisting of partially consolidated powder material (76).

3. The combustion chamber tile of claim 2, wherein the plurality of regions (76) being equally spaced around the edges of the tile.

4. The combustion chamber tile of any one of claims 1 to 3, wherein the at least one region (76) consisting of partially consolidated powder material consists of powder material which has a packing density of less than 85%.

5. The combustion chamber tile of any one of claims 1 to 4, wherein the remainder of the peripheral wall (74) consists of powder material which has a packing density greater than 90%.

6. The combustion chamber tile of any one of claims 1 to 5, wherein the remainder of the peripheral wall (74) consists of powder material which is fully consolidated.

7. The combustion chamber tile of any one of claims 1 to 6, wherein the main body (45) of the tile consists of powder material which has a packing density greater than 90%.

8. The combustion chamber tile of any one of claims 1 to 7, wherein the main body (45) of the tile consists of powder material which is fully consolidated.

9. The combustion chamber tile of any one of claims 1 to 8, wherein the at least one, or each, region (76) extends perpendicularly through the full thickness of the peripheral wall (74).

10. The combustion chamber tile of any one of claims 1 to 8, wherein the at least one region (76), or each region, extends at an angle to the perpendicular direction through the full thickness of the peripheral wall (74).

11. A method of manufacturing a combustion chamber tile (48A, 48B, 52A, 52B), the tile comprising a main body (45) having a first surface (41) and a second surface (43), the tile having a peripheral wall (74) extending around the edges of the tile and projecting from the first surface, the main body and the peripheral wall of the tile comprising a monolithic structure consisting of consolidated powder material, the peripheral wall of the tile having at least one region (76) consisting of partially consolidated powder material, the method comprising manufacturing the tile by an additive manufacturing technique using a powder material, the additive manufacturing technique comprising directing an energy beam (119) on the powder material to consolidate the powder material to form the main body of the tile and the peripheral wall and directing the energy beam on the powder material and controlling the energy beam to partially consolidate the powder material in the at least one region.

12. The method of claim 11, comprising directing the energy beam (119) on the powder material and controlling the energy beam to partially consolidate the powder material in a plurality of regions.

13. The method of claim 11 or 12, wherein the tile having at least one attachment feature (64) projecting from the first surface (41), the main body (45), the peripheral wall (74) and the at least one attachment feature of the tile comprising a monolithic structure consisting of consolidated powder material, the method comprising directing an energy beam (119) on the powder material to consolidate the powder material to form the main body of the tile, the peripheral wall and the at least one attachment feature.

14. A combustion chamber (16a) comprising an annular wall (48, 52) and a plurality of combustion chamber tiles (48A, 48B, 52A, 52B), each combustion chamber tile being removably secured to the annular wall, each combustion chamber tile comprising a main body (45) having a first surface (41) facing the annular wall and a second surface (43) facing away from the annular wall and towards a combustion zone, each combustion chamber tile having a peripheral wall (74) extending around the edges of the tile and projecting from the first surface towards the annular wall to space the combustion chamber tile from the annular wall, at least one of the combustion chamber tiles being a combustion chamber tile as claimed in any one of claims 1 to 10.

15. A gas turbine engine (10) for an aircraft, the gas turbine engine having a combustion chamber (16a) of claim 14.
